(19) Europäisches Patentamt
European Patent Office
Office européen des brevets

(11) **EP 3 583 387 B1**

(12) **EUROPÄISCHE PATENTSCHRIFT**

(45) Veröffentlichungstag und Bekanntmachung des Hinweises auf die Patenterteilung:
**21.07.2021 Patentblatt 2021/29**

(21) Anmeldenummer: **18702447.6**

(22) Anmeldetag: **24.01.2018**

(51) Int Cl.:
**G01C 25/00** *(2006.01)* **G01C 21/16** *(2006.01)*

(86) Internationale Anmeldenummer:
**PCT/EP2018/051662**

(87) Internationale Veröffentlichungsnummer:
**WO 2018/149601 (23.08.2018 Gazette 2018/34)**

(54) **VERFAHREN UND VORRICHTUNG ZUM ERKENNEN EINES STILLSTANDS EINES FAHRZEUGS**

METHOD AND DEVICE FOR DETECTING THE STANDSTILL OF A VEHICLE

PROCÉDÉ ET DIASPOSITIF POUR DÉTECTER L'ARRÊT D'UNE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.02.2017 DE 102017202539**

(43) Veröffentlichungstag der Anmeldung:
**25.12.2019 Patentblatt 2019/52**

(73) Patentinhaber: **Robert Bosch GmbH**
**70442 Stuttgart (DE)**

(72) Erfinder:
• **HAUCK, Kevin**
**74925 Epfenbach (DE)**
• **ROITH, Sebastian**
**71640 Ludwigsburg (DE)**

(56) Entgegenhaltungen:
**EP-A1- 0 488 594       KR-A- 20040 040 155**
**US-A1- 2008 234 933**

**Beschreibung**

Stand der Technik

Die Erfindung geht aus von einer Vorrichtung oder einem Verfahren nach Gattung der unabhängigen Ansprüche. Gegenstand der vorliegenden Erfindung ist auch ein Computerprogramm.

Inertialsensoren können driftbehaftet sein. Um die Drift eines Sensors zu Kompensieren kann ein Zeitpunkt verwendet werden, an dem das Signal des Sensors einen bekannten Wert aufweisen sollte. Beispielsweise kann dieser Zeitpunkt ein Stillstand eines Fahrzeugs sein.

Einfügeseite

Aus der KR 2004 0040155 A ist ein Fahrzeugnavigationssystem und ein Steuerungsverfahren bekannt, um fortlaufend Fehler von Sensoren eines berührungslosen Navigationssystems unter Verwendung von Trägheitssensoren unter Verwendung eines Bewegungsgrenzzustands eines Fahrzeugs zu korrigieren.

Dabei umfasst das Fahrzeugnavigationssystem einen GPS-Empfänger, einen Beschleunigungssensor, einen Winkelgeschwindigkeitssensor, eine Zufallsfehlerkorrektureinheit, eine Standwinkelkorrektureinheit, eine Schwerkraftkompensationseinheit, einen Geschwindigkeitsrechner, eine Stoppentscheidungseinheit, einen Positionsrechner, eine Grenzbedingungserzeugungseinheit und ein Fehlerschätzungsfilter. Der GPS-Empfänger wird zum Berechnen einer Zeit, einer Position, einer Geschwindigkeit und eines Richtungswinkels unter Verwendung eines GPS-Satellitensignals verwendet. Der Beschleunigungssensor wird zum Erfassen eines Beschleunigungselements gemäß der Bewegung eines Fahrzeugs verwendet. Der Winkelgeschwindigkeitssensor wird zum Erfassen eines Winkelgeschwindigkeitselements gemäß der Drehung des Fahrzeugs verwendet. Die Zufallsfehlerkorrektureinheit kompensiert Fehlerelemente des Beschleunigungssensors und des Winkelsensors.

Die Standwinkelkorrektureinheit erfasst einen Neigungswinkel und einen Richtungswinkel des Fahrzeugs. Die Schwerkraftkompensationseinheit berechnet Schwerkraftelemente in einem Prozess zum Messen eines Beschleunigungswerts. Der Geschwindigkeitsrechner berechnet die Geschwindigkeit des Fahrzeugs unter Verwendung eines Schwerkraftwerts. Die Stoppentscheidungseinheit entscheidet einen Stoppzustand des Fahrzeugs unter Verwendung jedes Ausgangswerts des Beschleunigungssensors und des Winkelgeschwindigkeitssensors. Der Positionsrechner berechnet die aktuelle Position des Fahrzeugs. Die Grenzzustandserzeugungseinheit erzeugt eine Bewegungsgrenzbedingung des Fahrzeugs. Das Fehlerschätzungsfilter berechnet Fehler des Beschleunigungssensors und des Winkelgeschwindigkeitssensors sowie Fehler der Navigationsinformationen.

Aus der US 2008/234933 A1 ist ein System und ein Verfahren zum Erfassen eines statischen Fahrzeugzustands bekannt. In dieser Hinsicht umfasst ein repräsentatives System einen Sensor, der mindestens eine Beschleunigung und Winkelgeschwindigkeit eines Fahrzeugs erfasst. Der Sensor ist ferner wirksam, um ein Fahrzeugvibrationsprofil basierend auf mindestens einer der erfassten Beschleunigungen und Winkelraten des Fahrzeugs zu erzeugen. Das System umfasst ferner eine Rechenvorrichtung, die das Fahrzeugvibrationsprofil vom Sensor empfängt, wobei die Rechenvorrichtung ferner arbeitet, um basierend auf dem Fahrzeugvibrationsprofil zu bestimmen, ob das Fahrzeug stationär ist oder sich bewegt. Ein repräsentatives Verfahren zum Erfassen eines statischen Fahrzeugzustands umfasst das Erfassen mindestens eines der Beschleunigungs- und Winkelgrade eines Fahrzeugs; Erzeugen eines Fahrzeugvibrationsprofils basierend auf mindestens einer der erfassten Beschleunigungen und Winkelgrade des Fahrzeugs; Empfangen des Fahrzeugvibrationsprofils; und Bestimmen, ob das Fahrzeug stationär ist oder sich bewegt, basierend auf dem Fahrzeugvibrationsprofil.

Aus der EP 0 488 594 A1 ist eine Versatzkorrekturvorrichtung bekannt, umfassend einen Drehwinkelgeschwindigkeitssensor, einen Fahrzeuggeschwindigkeitssensor zum Ausgeben eines gepulsten Signals jede konstante von einem Fahrzeug zurückgelegte Strecke, Stoppbestimmungsmittel zum Bestimmen eines Fahrzeugstopps, Versatzberechnungsmittel zum Integrieren der Ausgabe Daten des Drehwinkelsensors während eines Zeitraums des Fahrzeugstopps, der durch das Stoppbestimmungsmittel bestimmt wird, und dann Berechnen eines Versatzwerts einer Ausgabe des Drehwinkelsensors, Speichermittel zum Speichern des berechneten Versatzwerts durch die Versatzberechnungseinrichtung und Richtungskorrektureinrichtung zum Korrigieren von Winkelgeschwindigkeitsdaten des Fahrzeugs, die aus der Ausgabe des Drehwinkelgeschwindigkeitssensors erhalten wurden, oder von Richtungsdaten, die durch Integrieren der Winkelgeschwindigkeitsdaten mit dem Versatzwert erhalten wurden, wobei, wenn die Das gepulste Signal vom Fahrzeuggeschwindigkeitssensor verschwindet und die Ausgabe vom Drehwinkelsensor ist kleiner als ein Drittel Halten, bestimmt das Stoppbestimmungsmittel, dass sich das Fahrzeug in einem Stopp befindet.

Offenbarung der Erfindung
Vor diesem Hintergrund werden mit dem hier vorgestellten Ansatz ein Verfahren zum Erkennen eines Stillstands eines Fahrzeugs, weiterhin eine Vorrichtung, die dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Der Stillstand eines Fahrzeugs kann durch eine Datenfusion zumindest zweier unterschiedlicher Sensoren erkannt werden. Anhand einer Kombination zumindest eines Beschleunigungssignals und zumindest eines Drehratensignals kann der Stillstand mit einer großen Sicherheit erkannt werden.

Es wird ein Verfahren zum Erkennen eines Stillstands eines Fahrzeugs offenbart, wobei das Verfahren die folgenden Schritte aufweist:

Filtern eines Beschleunigungswerts in einer ersten Achse des Fahrzeugs und Filtern eines Drehratenwerts um eine orthogonal zu der Achse ausgerichtete zweite Achse des Fahrzeugs unter Verwendung einer Filtervorschrift, um einen gefilterten Beschleunigungswert und einen gefilterten Drehratenwert zu erhalten;

Normieren des gefilterten Beschleunigungswerts und des gefilterten Drehratenwerts unter Verwendung einer Normierungsvorschrift, um einen normierten Beschleunigungswert und einen normierten Drehratenwert zu erhalten; und

Beobachten des normierten Beschleunigungswerts und des normierten Drehratenwerts unter Verwendung einer Beobachtungsvorschrift, um den Stillstand zu erkennen, wobei der Stillstand erkannt wird, wenn eine Summe des normierten Beschleunigungswerts (axn) und des normierten Drehratenwerts (wyn) kleiner als ein Stillstandswert ist.

Ein Beschleunigungswert kann durch ein Beschleunigungssignal eines Beschleunigungssensors übertragen werden. Ein Drehratenwert kann durch ein Drehratensignal eines Drehratensensors übertragen werden. Durch die Filtervorschrift kann ein Verlauf der Werte geglättet werden. Durch eine Normierung können die Werte so transformiert werden, dass sie in Bezug zueinander gesetzt werden können. Die Normierungsvorschrift kann eine Transformation, beispielsweise eine z-Transformation, sein. Durch die Normierungsvorschrift können der gefilterte Beschleunigungswert und der gefilterte Drehratenwert so transformiert werden, dass die sich aus der Normierung ergebenden Werte miteinander verglichen werden können. Die Normierungsvorschrift kann zumindest einen bei der einer solchen Transformation zu verwendenden Normierungsfaktor umfassen. Abhängig von einem Ergebnis des Vergleichs der Summe des normierten Beschleunigungswerts und des normierten Drehratenwerts mit dem Stillstandswert wird der Stillstand als erkannt oder nicht erkannt angesehen. Der Stillstand wird als erkannt angesehen, wenn der gemäß der Beobachtungsvorschrift durchgeführte Vergleich keine Grenzwertüberschreitung als Ergebnis liefert.

Der Beschleunigungswert und/oder der Drehratenwert kann über eine Driftzeitspanne gemittelt werden, wenn der Stillstand erkannt wird, um eine Beschleunigungsspannweite und/oder eine Drehratenspannweite zu erhalten. Eine Bewegung des Fahrzeugs kann erkannt werden, wenn die Beschleunigungsspannweite und/oder die Drehratenspannweite einen Grenzwert überschreitet. Eine Spannweite kann ein Werteumfang eines Werts innerhalb der Driftzeitspanne sein. Die Spannweite zeigt eine Dynamik des Signals.

Der Beschleunigungswert und/oder der Drehratenwert kann über eine Dynamikzeitspanne gemittelt werden, um den gefilterten Beschleunigungswert und/oder den gefilterten Drehratenwert zu erhalten, wenn eine Bewegung erkannt wird. Durch eine Mittelwertbildung können Ausreißer nach oben und unten geglättet werden.

Für eine Mindestzeitdauer kann kein Stillstand erkannt werden, wenn eine Bewegung erkannt wird. Durch ein Abwarten nach einer Bewegung kann eine Erkennungssicherheit vergrößert werden.

Der Stillstand wird erkannt, wenn eine Summe des normierten Beschleunigungswerts und des normierten Drehratenwerts kleiner als ein Stillstandswert ist. Zusätzlich kann eine Änderung des normierten Beschleunigungswerts und eine Änderung des normierten Drehratenwerts summiert werden und mit dem Stillstandswert verglichen werden. Durch eine größer oder kleiner Entscheidung kann die Beobachtung einfach und schnell erfolgen.

Ein weiterer Beschleunigungswert in der zweiten Achse und ein weiterer Drehratenwert um eine orthogonal zu der ersten und zweiten Achse ausgerichtete dritte Achse des Fahrzeugs können unter Verwendung der Filtervorschrift gefiltert werden, um einen weiteren gefilterten Beschleunigungswert und einen weiteren gefilterten Drehratenwert zu erhalten.

Der weitere gefilterte Beschleunigungswert und der weitere gefilterte Drehratenwert können unter Verwendung der Normierungsvorschrift normiert werden, um einen weiteren normierten Beschleunigungswert und einen weiteren normierten Drehratenwert zu erhalten. Der weitere normierte Beschleunigungswert und der weitere normierte Drehratenwert können unter Verwendung der Beobachtungsvorschrift beobachtet werden, um den Stillstand zu erkennen. Eine mehrachsige Betrachtung kann den Stillstand mit einer erhöhten Sicherheit erkennen.

Der Stillstand kann zusätzlich dann erkannt werden, wenn ein zumindest eine Raddrehzahl des Fahrzeugs abbildender Raddrehzahlwert kleiner als ein Radstillstandswert ist. Durch die Raddrehzahl kann die Stillstanderkennung abgesichert werden.

Der Stillstand kann zusätzlich dann erkannt werden, wenn kein Regler des Fahrzeugs aktiv ist.

Durch Regeleingriffe kann eine natürliche Bewegung des Fahrzeugs gestört werden. Dadurch kann es zum falschen Erkennen kommen. Diese Fehlerkennungen können so ignoriert werden.

Dieses Verfahren kann beispielsweise in Software oder Hardware oder in einer Mischform aus Software und Hardware beispielsweise in einem Steuergerät implementiert sein.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:

Fig. 1 ein Blockschaltbild eines Fahrzeugs mit einer Vorrichtung zum Erkennen eines Stillstands des Fahrzeugs gemäß einem Ausführungsbeispiel;

Fig. 2 ein Ablaufdiagramm eines Verfahrens zum Erkennen eines Stillstands eines Fahrzeugs gemäß einem Ausführungsbeispiel;

Fig. 3 einen Ablaufplan eines Computerprogramms zum Erkennen eines Stillstands eines Fahrzeugs gemäß einem Ausführungsbeispiel; und

die Figuren 4 bis 7 Darstellungen von Signalverläufen während eines Erkennens eines Stillstands eines Fahrzeugs gemäß einem Ausführungsbeispiel;

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

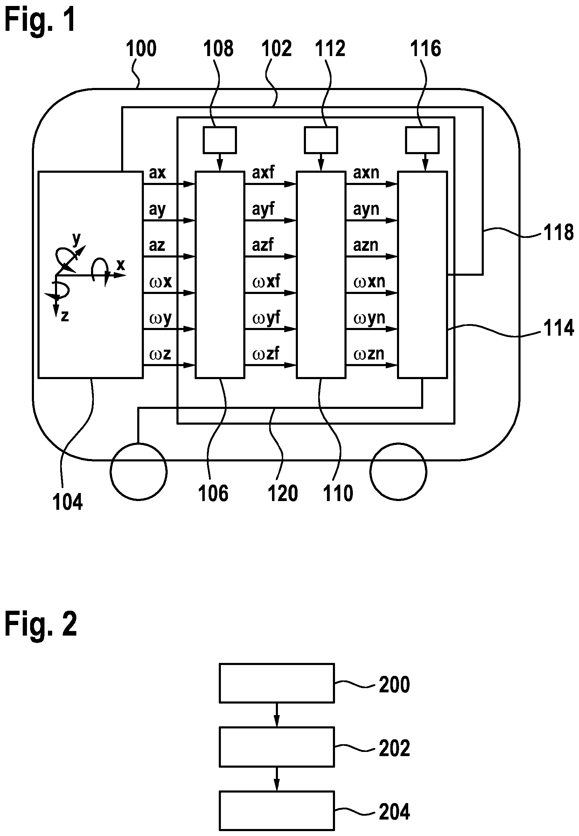

Fig. 1 zeigt ein Blockschaltbild eines Fahrzeugs 100 mit einer Vorrichtung 102 zum Erkennen eines Stillstands des Fahrzeugs 100 gemäß einem Ausführungsbeispiel. Das Fahrzeug 100 weist eine Sensorvorrichtung 104 zum Erfassen von Beschleunigungswerten $a_x$, $a_y$, $a_z$ in drei Achsen x, y, z des Fahrzeugs 100 und Drehratenwerten $\omega_x$, $\omega_y$, $\omega_z$ um die drei Achsen x, y, z auf. Die drei Achsen x, y, z stehen dabei orthogonal aufeinander, wobei die x-Achse als Fahrzeuglängsrichtung bezeichnet werden kann, die y-Achse als Fahrzeugquerrichtung bezeichnet werden kann und die z-Achse als Fahrzeughochrichtung bezeichnet werden kann. Die Beschleunigungswerte $a_x$, $a_y$, $a_z$ bilden momentan am Fahrzeug 100 wirkende Beschleunigungskomponenten in Richtung der Achsen x, y, z einer resultierenden Gesamtbeschleunigung ab. Die Drehratenwerte $\omega_x$, $\omega_y$, $\omega_z$ bilden momentan am Fahrzeug 100 wirkende Drehratenkomponenten um die Achsen x, y, z einer resultierenden Gesamtdrehrate ab.

Die Drehratensensoren der Sensorvorrichtung 104 sind driftbehaftet. Die Drift wird durch Kompensationsparameter kompensiert. Die Kompensationsparameter können während eines Stillstands des Fahrzeugs bestimmt werden.

Zum Erkennen des Stillstands liest die Vorrichtung 102 zumindest den Beschleunigungswert $a_x$ und den Drehratenwert $\omega_y$ ein. In einer Filtereinrichtung 106 werden hochfrequente Signalanteile unter Verwendung einer Filtervorschrift 108 ausgefiltert. Der gefilterte Beschleunigungswert $a_{xf}$ und der gefilterte Drehratenwert $\omega_{yf}$ werden in einer Normierungseinrichtung 110 unter Verwendung einer Normierungsvorschrift 112 normiert. Der normierte Beschleunigungswert $a_{xn}$ und der normierte Drehratenwert $\omega_{yn}$ werden in einem Beobachter 114 unter Verwendung einer Beobachtungsvorschrift 116 beobachtet, um den Stillstand des Fahrzeugs 100 zu erkennen. Wenn der Stillstand erkannt wird, wird ein Stillstandssignal 118 ausgegeben. Wenn das Stillstandssignal 118 von der Sensorvorrichtung 104 eingelesen wird, werden die Kompensationsparameter eingestellt.

In einem Ausführungsbeispiel werden ferner der Beschleunigungswert ay und der Drehratenwert ωz eingelesen. In der Filtereinrichtung 106 werden der Beschleunigungswert ay und der Drehratenwert ωz gefiltert. In der Normierungseinrichtung 110 werden der gefilterte Beschleunigungswert ayf und der gefilterte Drehratenwert ωzf normiert. In dem Beobachter werden der normierte Beschleunigungswert ayn und der normierte Drehratenwert ωzn beobachtet, um den Stillstand zu erkennen.

In einem Ausführungsbeispiel werden die Beschleunigungswerte ax, ay, az und alternativ oder ergänzend die Drehratenwerte ωx, ωy, ωz in der Filtereinrichtung 106 gemittelt, um hochfrequente Ausreißer auszufiltern. Dabei werden die Beschleunigungswerte ax, ay, az und die Drehratenwerte ωx, ωy, ωz über einen gleitenden Mittelungszeitraum gemittelt. Der Mittelungszeitraum kann variabel sein. Beispielsweise kann der Mittelungszeitraum abhängig davon sein, ob der Stillstand oder eine Bewegung des Fahrzeugs 100 erkannt wird.

In der Filtereinrichtung 106 können Beschleunigungsspannweiten und/oder Drehratenspannweiten ermittelt werden. Dabei kennzeichnet eine Beschleunigungsspannweite eine Varianz eines der Beschleunigungswerte ax, ay, az innerhalb eines Betrachtungszeitraums, während eine Drehratenspannweite eine Varianz eines der Drehratenwerte ωx, ωy, ωz innerhalb eines Betrachtungszeitraums kennzeichnet. Der Betrachtungszeitraum kann dem Mittelungszeitraum entsprechen. Die Beschleunigungsspannweiten und/oder Drehratenspannweiten können in dem Beobachter 114 verwendet werden, um eine Bewegung zu erkennen. Dabei kann die Bewegung erkannt werden, wenn eine Beschleunigungsspannweite und/oder Drehratenspannweite größer als ein Grenzwert ist.

In einem Ausführungsbeispiel wird von dem Beobachter 114 ferner ein Raddrehzahlwert 120 eingelesen. Der Raddrehzahlwert 120 repräsentiert eine Raddrehzahl zumindest eines der Räder des Fahrzeugs 100. Der Stillstand kann erkannt werden, wenn die Räder stillstehen.

Mit anderen Worten wird eine Fahrzeug Stillstandserkennung mit Dynamic-Detectors 114 vorgestellt.

Eine Stillstandserkennung kann durch das ESP erfolgen und auf den Radsignalen 120, der Gierrate und Statusflags des Steuergeräts basieren.

Für eine hochgenaue Positionierung eines Fahrzeugs mittels Inertialsensorik 104 wird eine hohe Güte der Sensorsignale benötigt. Ein Offset von Drehratensensoren kann während eines Stillstands abgeglichen werden. Wichtig ist hierbei, dass während des Stillstands keine hohe Dynamik des Signals auftritt, da dies einen negativen Einfluss auf den Abgleich der Offsets hat.

Die hier vorgestellte Stillstanderkennung benutzt neben den Radgeschwindigkeiten 120 zusätzlich drei Beschleunigungen ax, ay, az und drei Drehratensignale ωx, ωy, ωz, um so die Dynamik der Signale ax, ay, az, ωx, ωy, ωz während eines Stillstands zu minimieren.

Durch eine geeignete Kombination von Beschleunigungssignalen ax, ay, az und Drehratensignalen ωx, ωy, ωz, welche im Speziellen bei Anfahrbewegungen und Abbremsbewegungen stark miteinander korreliert sind, wird die Empfindlichkeit des Algorithmus erhöht. Beispielsweise ist die Beschleunigung ax stark mit der Drehrate ωy korreliert und die Beschleunigung ay mit der Drehrate ωz. Diese sogenannten Dynamic Detectors 114 verbessern die Performance des Algorithmus dahin gehend, dass das Losfahren des Fahrzeugs 100 schneller detektiert und beim Abbremsvorgang nicht zu früh in den Stillstand gewechselt wird.

Der Algorithmus selbst dient hauptsächlich zum Abgleich der Sensorsignale ax, ay, az, ωx, ωy, ωz bei der Schätzung der Drehratenoffsets. Der hier vorgestellte Ansatz kann für einen Vehicle Motion und Position Sensor (VMPS) 104 verwendet werden.

Bei dem Dynamic Detector 114 für ax und ωy wird die Änderung der Beschleunigung ax in x-Richtung und die Änderung der Drehrate ωy um die y-Achse betrachtet. Durch eine geeignete Kombination beider Signale ax, ωy lässt sich die Empfindlichkeit des Algorithmus steigern. Für eine Kombination beider Signale ax, ωy werden die Signale ax, ωy zunächst normiert. Ein Fahrzeugstillstand wird erkannt, wenn die Summe aus der normierten Änderung der Beschleunigung entlang der x-Achse Δax,norm und der normierten Änderung der Drehrate um die y-Achse Δwy,norm kleiner als ein festgelegter Grenzwert ist. Die Herausforderung bei der Parametrierung liegt dabei unter anderem darin, den Einfluss hochfrequenter Ausreißer zu verringern, aber dennoch kleine dynamische Einflüsse, welche beispielsweise durch langsames Losfahren erzeugt werden, zu erfassen. Dazu werden beide Signale ax, ωy zunächst über eine Zeitspanne tmov,dyn gemittelt, um den Einfluss hochfrequenter Störungen zu verringern und anschließend normiert.

Für den Normierungsfaktor wurde der 4σ Wert für das Rauschen des jeweiligen Signals aus der Spezifikation verwendet. Anschaulich bedeutet dies, dass bei einer Normalverteilung 95,45% innerhalb dieses Bereiches liegen. Mit einer Wahrscheinlichkeit von 95,45% ist der normierte Wert während des Stillstandes kleiner eins. Ein Wert größer eins deutet auf hohe Dynamik im Signal hin. Da ein Mittelwertfilter zur Rauschunterdrückung verwendet wird, kann der 4σ Wert dahin gehend modifiziert werden, dass er der Standardabweichung des gefilterten Signals entspricht. Die Standardabweichung eines mit-

$$\sigma_n = \frac{\sigma}{\sqrt{n}}$$

telwertgefilterten Signals lässt sich durch berechnen

Bei dem Dynamic Detector 114 für ay und ωz wird analog zur vorherigen Bedingung die Betrachtung für die Änderung der Beschleunigung ay in y-Richtung und die Änderung der Drehrate ωz um die z-Achse betrachtet. Die normierte Änderung der Beschleunigung wird mit Δay,norm und die normierte Änderung der Drehrate um die z-Achse mit Δωz,norm bezeichnet.

In einem Ausführungsbeispiel wird eine Spannweite für die Beschleunigungen im Stillstand unter Verwendung eines Grenzwerts überwacht. Diese Bedingung soll zusätzlich zu den Dynamic Detectors 114 ein langsames Losfahren des Fahrzeugs 100 rechtzeitig erkennen. Hierfür werden während des Stillstands die maximal und minimal Werte für ax und ay ermittelt. Um wiederum den Einfluss hochfrequenter Ausreißer zu verringern, werden die Signale zunächst über die Zeitspanne tmov,drift gemittelt. Sobald die Spannweite beziehungsweise der range (max-min) eines der beiden Signale ax,range und ay,range einen festgelegten Grenzwert überschreitet, wird der Stillstand für eine Mindestzeit tmind verlassen. Dadurch soll sichergestellt werden, dass nicht sofort wieder in den Stillstand gewechselt wird, da der Dynamic-Detector 114 das langsame Losfahren noch nicht erkannt hat und immer noch Stillstand signalisiert. Hierbei sei erwähnt, dass die Offsetsdrifts der Beschleunigungssignale ax, ay gegenüber diesem Grenzwert vernachlässigbar klein sind.

In einem Ausführungsbeispiel wird eine Spannweite für die Drehraten im Stillstand unter Verwendung eines Grenzwerts überwacht. Analog zur vorherigen Bedingung wird der Stillstand verlassen, falls eine der drei Spannweiten ωx,range, ωy,range oder ωz,range einen festgelegten Grenzwert überschreitet.

Auch die Radgeschwindigkeiten 120 vrad können unter Verwendung eines Grenzwerts überwacht werden. Ein Fahrzeugstillstand wird beispielsweise erkannt, wenn die Radgeschwindigkeiten 120 null entsprechen.

Der Stillstand zum wird dann erkannt, wenn kein Regler aktiv ist. Unter Verwendung sogenannter Statusflags wird sichergestellt, dass kein Regler, wie beispielsweise das ABS aktiv ist.

Fig. 2 zeigt ein Ablaufdiagramm eines Verfahrens zum Erkennen eines Stillstands eines Fahrzeugs gemäß einem Ausführungsbeispiel. Das Verfahren kann beispielsweise auf einer Vorrichtung, wie sie in Fig. 1 dargestellt ist, ausgeführt werden. Das Verfahren weist einen Schritt 200 des Filterns, einen Schritt 202 des Normierens und einen Schritt 204 des Beobachtens auf. Im Schritt 200 des Filterns werden ein Beschleunigungswert in einer ersten Achse des Fahrzeugs und ein Drehratenwert um eine orthogonal zu der Achse ausgerichtete zweite Achse des Fahrzeugs unter Verwendung einer Filtervorschrift gefiltert, um einen gefilterten Beschleunigungswert und einen gefilterten Drehratenwert zu erhalten. Im Schritt 202 des Normierens werden der gefilterte Beschleunigungswert und der gefilterte Drehratenwert unter Verwendung einer Normierungsvorschrift normiert, um einen normierten Beschleunigungswert und einen normierten Drehratenwert zu erhalten. Im Schritt 204 des Beobachtens werden der normierte Beschleunigungswert und der normierte Drehratenwert unter Verwendung einer Beobachtungsvorschrift beobachtet, um den Stillstand zu erkennen.

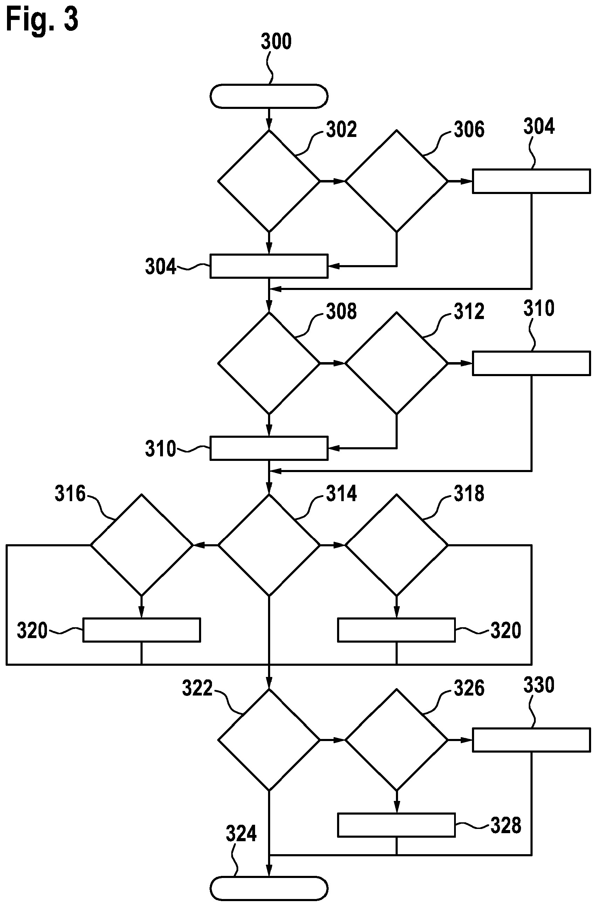

Fig. 3 zeigt einen Ablaufplan eines Computerprogramms zum Erkennen eines Stillstands eines Fahrzeugs gemäß einem Ausführungsbeispiel. Das Computerprogramm kann beispielsweise auf einer Vorrichtung, wie sie in Fig. 1 dargestellt ist, ausgeführt werden. Das Computerprogramm bildet ein Ausführungsbeispiel des in Fig. 2 dargestellten Verfahrens zum Erkennen ab. Insbesondere ist hier der Schritt des Beobachtens dargestellt. Nach einem Programmstart 300 wird eine erste Abfrage 302 durchgeführt. In der ersten Abfrage 302 wird überprüft, ob eine Summe der Beträge der Änderung des Beschleunigungswerts in der x-Achse und der Änderung des Drehratenwerts um die y-Achse kleiner zwei ist.

$$\left| \Delta a_{x,norn} \right| + \left| \Delta \omega_{y,norn} \right| < 2$$

Weiterhin wird überprüft, ob eine Summe der Beträge der Änderung des Beschleunigungswerts in der y-Achse und der Änderung des Drehratenwerts um die z-Achse kleiner zwei ist.

$$\left| \Delta a_{y,norn} \right| + \left| \Delta \omega_{z,norn} \right| < 2$$

Wenn die Bedingungen nicht erfüllt sind, wird in einer ersten Aktion 304 ein Bedingungsmarker auf unerfüllt beziehungsweise null gesetzt. Wenn die Bedingungen der ersten Abfrage 302 erfüllt sind, wird in einer zweiten Abfrage 306 überprüft, ob die Bedingungen für eine Mindestzeitdauer erfüllt werden. Insbesondere wird in der zweiten Abfrage 306 überprüft, ob die Bedingungen für mindestens 300 Millisekunden [ms] erfüllt werden. Wenn nicht, wird in der ersten Aktion 304 der Bedingungsmarker ebenfalls auf unerfüllt beziehungsweise null gesetzt. Wenn die Bedingungen mindestens für die Mindestzeitdauer erfüllt werden, wird in der ersten Aktion 304 der Bedingungsmarker auf erfüllt beziehungsweise eins gesetzt.

Anschließend wird in einer dritten Abfrage 308 überprüft, ob der Bedingungsmarker auf erfüllt beziehungsweise eins gesetzt ist und zusätzlich die Radgeschwindigkeit gleich null ist.

$$v_{Rad} = 0 \, \frac{m}{s}$$

Wenn dies nicht der Fall ist, wird in einer zweiten Aktion 310 ein Stillstandsflag auf unerfüllt beziehungsweise null gesetzt. Wenn der Bedingungsmarker auf erfüllt beziehungsweise eins gesetzt ist und zusätzlich die Radgeschwindigkeit gleich null ist, wird in einer vierten Abfrage 112 überprüft, ob die Bedingungen für eine Mindestzeitdauer erfüllt werden. Insbesondere wird in der vierten Abfrage 306 überprüft, ob die Bedingungen für mindestens 300 ms erfüllt werden. Wenn nicht, wird in der zweiten Aktion 310 der Stillstandsflag ebenfalls auf unerfüllt beziehungsweise null gesetzt. Wenn die Bedingungen mindestens für die Mindestzeitdauer erfüllt werden, wird in der zweiten Aktion 310 der Stillstandsflag auf erfüllt beziehungsweise eins gesetzt.

In einer fünften Abfrage 314 wird überprüft, ob der Stillstandsflag auf erfüllt beziehungsweise eins gesetzt ist. Wenn dies der Fall ist, werden parallel zwei weitere Abfragen 316, 318 durchgeführt. In der sechsten Abfrage 316 wird überprüft, ob die Drehratenspannweiten in allen Achsen kleiner als ein Drehratenspannweitengrenzwert sind. Insbesondere wird überprüft, ob die Drehratenspannweiten kleiner als 0,007 rad/s sind.

$$\omega_{x,range} < 0{,}007 \, \frac{rad}{s}$$

$$\omega_{y,range} < 0{,}007 \, \frac{rad}{s}$$

$$\omega_{z,range} < 0{,}007 \, \frac{rad}{s}$$

In der siebten Abfrage 318 wird überprüft, ob die Beschleunigungsspannweiten in der x-Achse und der y-Achse kleiner als ein Beschleunigungsspannweitengrenzwert sind. Insbesondere wird überprüft, ob die Beschleunigungsspannweiten kleiner als 0,125 m/s² sind.

$$a_{x,range} < 0{,}125 \, \frac{m}{s^2}$$

$$a_{y,range} < 0{,}125 \, \frac{m}{s^2}$$

Wenn zumindest eine der Drehratenspannweiten größer als der Drehratenspannweitengrenzwert ist und/oder wenn zumindest eine der Beschleunigungsspannweiten größer als der Beschleunigungsspannweitengrenzwert ist, wird in einer dritten Aktion 320 ein Driftflag auf erfüllt beziehungsweise eins gesetzt, wobei der Stillstandsflag auf unerfüllt beziehungsweise null gesetzt wird.

Wenn nach der fünften Abfrage 314 der Stillstandsflag auf unerfüllt beziehungsweise null gesetzt ist, wird in einer achten Abfrage 322 überprüft, ob der Driftflag auf erfüllt beziehungsweise eins gesetzt ist. Wenn der Driftflag auf unerfüllt beziehungsweise null gesetzt ist, folgt ein Programmende 324. Wenn der Driftflag auf erfüllt beziehungsweise eins gesetzt ist, wird in einer neunten Abfrage 326 überprüft, ob der Driftflag für eine Mindestzeitdauer auf erfüllt beziehungsweise eins gesetzt ist. Insbesondere wird in der vierten Abfrage 306 überprüft, ob der Driftflag für 1000 ms auf erfüllt beziehungsweise eins gesetzt ist. Solange der Driftflag für weniger als 1000 ms auf erfüllt beziehungsweise eins gesetzt ist, wird in einer vierten Aktion 328 der Stillstandsflag auf unerfüllt beziehungsweise null gesetzt. Anschließend folgt das Programmende 324. Wenn der Driftflag für mehr als 1000 ms auf erfüllt beziehungsweise eins gesetzt ist, wird in einer fünften Aktion 330 der Driftflag auf unerfüllt beziehungsweise null gesetzt. Anschließend folgt das Programmende 324.

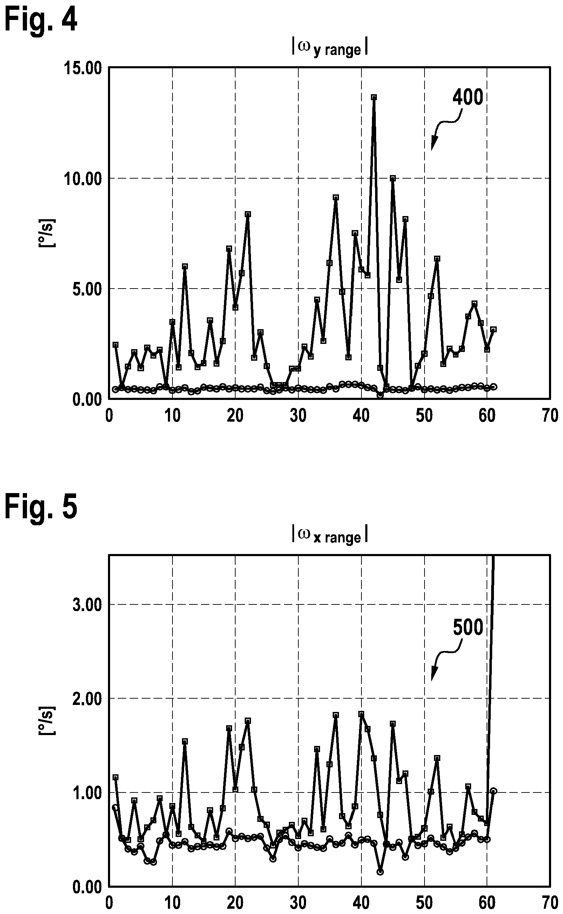

Die Figuren 4 bis 7 zeigen Darstellungen von Signalverläufen während eines Erkennens eines Stillstands eines Fahrzeugs gemäß einem Ausführungsbeispiel. In den Figuren 4 bis 6 sind Spannweiten 400, 500, 600 von Drehratenwerten verschiedener Achsen über eine Vielzahl von Messungen aufgetragen. Die Spannweiten 400, 500, 600 sind dabei pro Achse in einem Diagramm aufgetragen, das auf der Abszisse die fortlaufende Nummer der Messung und auf der Ordinate die Drehrate in Grad pro Sekunde [°/s] angetragen hat.

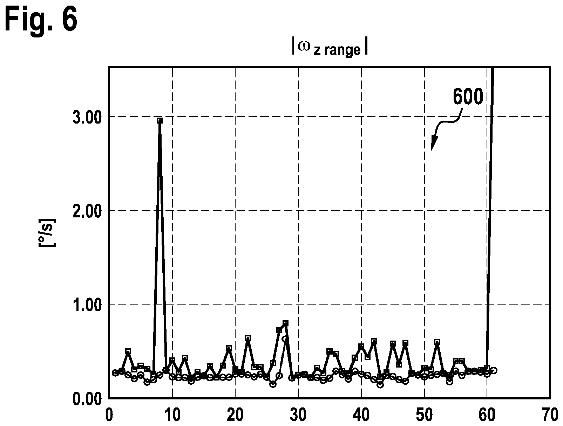

In Fig. 4 ist die Drehratenspannweite 400 um die y-Achse dargestellt. In Fig. 5 ist die Drehratenspannweite 500 um die x-Achse dargestellt. In Fig. 6 ist die Drehratenspannweite 600 um die z-Achse dargestellt. Bei der Verwendung des hier vorgestellten Ansatzes resultiert über viele Messungen hinweg eine signifikant verringerte Spannweite 400, 500, 600.

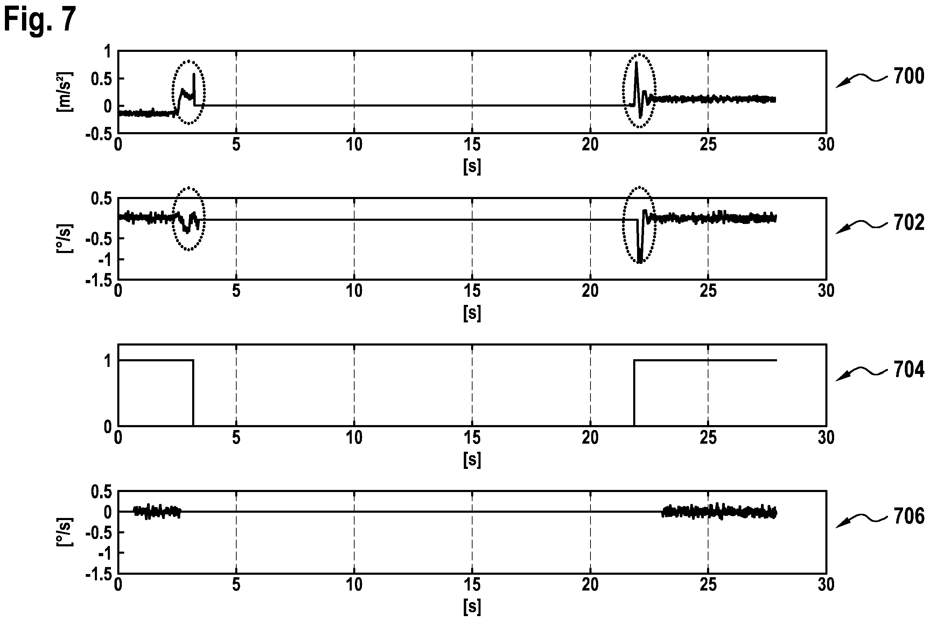

In Fig. 7 ist ein Vergleich der Stillstandserkennung zwischen einem konventionellen Ansatz und dem hier vorgestellten Ansatz dargestellt. Dazu sind in vier zeitlich korrelierten Diagrammen Signalverläufe 700, 702, 704, 706 dargestellt. Der erste Signalverlauf 700 zeigt Beschleunigungswerte ax, der zweite Signalverlauf 702 zeigt Drehratenwerte ωy, der dritte Signalverlauf 704 zeigt ein binäres Stillstandsflag und der vierte Signalverlauf 706 zeigt Drehratenwerte ωy. Dabei basieren die Signalverläufe 700, 702, 704 auf dem konventionellen Ansatz. Der vierte Signalverlauf 706 basiert auf dem hier vorgestellten Ansatz.

Mit anderen Worten zeigen die Figuren 4 bis 7 Signalvergleiche zwischen dem ESP basierten Ansatz und der hier vorgestellten Stillstandserkennung mittels Dynamic-Detectors. Für den Vergleich der beiden Algorithmen wurden 61 reale Messfahrten verwendet. Als Versuchsträger wurde ein VW Golf mit einer Inertialsensorik MM7 verwendet.

Die Grafiken in den Figuren 4 bis 6 zeigen die Differenz zwischen maximalem und minimalem Signalwert während des detektierten Stillstands.

In Fig. 7 ist eine repräsentative Auflistung einer Messfahrt dargestellt.

Der Signalverlauf 700 stellt die Beschleunigung ax maskiert mit dem ESP Stillstandsalgorithmus dar. Der Signalverlauf 702 stellt die Drehrate ωy maskiert mit dem ESP Stillstandsalgorithmus dar. Der Signalverlauf 704 stellt das ESP Stillstandssignal dar, wobei eine "1" einen Stillstand darstellt und eine "0" keinen Fahrzeugstillstand.

Der Signalverlauf 706 stellt die Drehrate ωy maskiert mit der hier vorgestellten Stillstandserkennung mit den Dynamic-Detectors dar. Auffallend ist die Korrelation zwischen der Drehrate ωy und der Beschleunigung ax. Der ESP Ansatz erkennt den Stillstand zu früh und erkennt langsames Losfahren zu spät. Die hier vorgestellte Stillstandserkennung mit Dynamic-Detectors zeigt eine deutlich bessere Performance.

**Patentansprüche**

1. Verfahren zum Erkennen eines Stillstands eines Fahrzeugs (100), wobei das Verfahren die folgenden Schritte aufweist:

    Filtern (200) eines Beschleunigungswerts (ax) in einer ersten Achse (x) des Fahrzeugs (100) und Filtern eines Drehratenwerts (ωy) um eine orthogonal zu der Achse (x) ausgerichtete zweite Achse (y) des Fahrzeugs (100) unter Verwendung einer Filtervorschrift (108), um einen gefilterten Beschleunigungswert (axf) und einen gefilterten Drehratenwert (ωyf) zu erhalten;
    Normieren (202) des gefilterten Beschleunigungswerts (axf) und des gefilterten Drehratenwerts (ωyf) unter Verwendung einer Normierungsvorschrift (112), um einen normierten Beschleunigungswert (axn) und einen normierten Drehratenwert (ωyn) zu erhalten; und
    Beobachten (204) des normierten Beschleunigungswerts (axn) und des normierten Drehratenwerts (ωyn) unter Verwendung einer Beobachtungsvorschrift (116), um den Stillstand zu erkennen, **dadurch gekennzeichnet, dass** der Stillstand erkannt wird, wenn eine Summe des normierten Beschleunigungswerts (axn) und des normierten Drehratenwerts (ωyn) kleiner als ein Stillstandswert ist.

2. Verfahren gemäß Anspruch 1, bei dem im Schritt (200) des Filterns der Beschleunigungswert (ax) und/oder der Drehratenwert (ωy) über eine Driftzeitspanne gemittelt wird, wenn der Stillstand erkannt wird, um eine Beschleunigungsspannweite und/oder eine Drehratenspannweite zu erhalten, wobei im Schritt (206) des Beobachtens eine Bewegung des Fahrzeugs (100) erkannt wird, wenn die Beschleunigungsspannweite und/oder die Drehratenspannweite einen Grenzwert überschreitet.

3. Verfahren gemäß einem der vorangegangenen Ansprüche, bei dem im Schritt (200) des Filterns der Beschleunigungswert (ax) und/oder der Drehratenwert (ωy) über eine Dynamikzeitspanne gemittelt wird, um den gefilterten Beschleunigungswert (axf) und/oder den gefilterten Drehratenwert (ωyf) zu erhalten, wenn im Schritt (206) des Beobachtens eine Bewegung erkannt wird.

4. Verfahren gemäß einem der vorangegangenen Ansprüche, bei dem im Schritt (206) des Beobachtens für eine Mindestzeitdauer kein Stillstand erkannt wird, wenn eine Bewegung erkannt wird.

5. Verfahren gemäß einem der vorangegangenen Ansprüche, bei dem im Schritt (200) des Filterns ein weiterer Beschleunigungswert (ay) in der zweiten Achse (y) und ein weiterer Drehratenwert (ωz) um eine orthogonal zu der ersten und zweiten Achse (x, y) ausgerichtete dritte Achse (z) des Fahrzeugs (100) unter Verwendung der Filtervorschrift (108) gefiltert wird, um einen weiteren gefilterten Beschleunigungswert (ayf) und einen weiteren gefilterten Drehratenwert (ωzf) zu erhalten, wobei im Schritt (202) des Normierens der weitere gefilterte Beschleunigungswert (ayf) und der weitere gefilterte Drehratenwert (ωzf) unter Verwendung der Normierungsvorschrift (112) normiert werden, um einen weiteren normierten Beschleunigungswert (ayn) und einen weiteren normierten Drehratenwert (ωzn) zu erhalten, wobei im Schritt (206) des Beobachtens der weitere normierte Beschleunigungswert (ayn) und der weitere normierte Drehratenwert (ωzn) unter Verwendung der Beobachtungsvorschrift (116) beobachtet werden, um den Stillstand zu erkennen.

6. Verfahren gemäß einem der vorangegangenen Ansprüche, bei dem im Schritt (206) des Beobachtens der Stillstand zusätzlich dann erkannt wird, wenn ein zumindest eine Raddrehzahl des Fahrzeugs abbildender Raddrehzahlwert (120) kleiner als ein Radstillstandswert ist.

7. Verfahren gemäß einem der vorangegangenen Ansprüche, bei dem im Schritt (206) des Beobachtens der Stillstand zusätzlich dann erkannt wird, wenn kein Regler des Fahrzeugs (100) aktiv ist.

8. Vorrichtung (102), die eingerichtet ist, um Schritte des Verfahrens gemäß einem der vorangegangenen Ansprüche in entsprechenden Einheiten auszuführen.

9. Computerprogramm, das dazu eingerichtet ist, das Verfahren gemäß einem der Ansprüche 1 bis 7 auszuführen.

10. Maschinenlesbares Speichermedium, auf dem das Computerprogramm nach Anspruch 9 gespeichert ist.

**Claims**

1. Method for detecting a standstill of a vehicle (100), wherein the method comprises the following steps:

   filtering (200) an acceleration value (ax) in a first axis (x) of the vehicle (100) and filtering a rotational speed value (ωy) about a second axis (y) of the vehicle (100) that is oriented orthogonally to the axis (x) using a filter specification (108) to obtain a filtered acceleration value (axf) and a filtered rotational speed value (ωyf);
   normalizing (202) the filtered acceleration value (axf) and the filtered rotational speed value (ωyf) using a normalizing specification (112) to obtain a normalized acceleration value (axn) and a normalized rotational speed value (ωyn); and
   observing (204) the normalized acceleration value (axn) and the normalized rotational speed value (ωyn) using an observation specification (116) to detect the standstill, **characterized in that**
   the standstill is detected if a sum of the normalized acceleration value (axn) and the normalized rotational speed value (ωyn) is less than a standstill value.

2. Method according to Claim 1, wherein, in step (200) of the filtering, the acceleration value (ax) and/or the rotational speed value (ωy) are/is averaged over a drift time period when the standstill is detected to obtain an acceleration range and/or a rotational speed range, wherein, in step (206) of the observation, a movement of the vehicle (100) is detected if the acceleration range and/or the rotational speed range exceed(s) a limit value.

3. Method according to any one of the preceding claims, wherein, in step (200) of the filtering, the acceleration value (ax) and/or the rotational speed value (ωy) are/is averaged over a dynamic time period to obtain the filtered acceleration value (axf) and/or the filtered rotational speed value (ωyf) if a movement is detected in step (206) of the observation.

4. Method according to any one of the preceding claims, wherein no standstill is detected for a minimum time period in step (206) of the observation if a movement is detected.

5. Method according to any one of the preceding claims, wherein, in step (200) of the filtering, a further acceleration value (ay) in the second axis (y) and a further rotational speed value (ωz) about a third axis (z) of the vehicle (100) that is oriented orthogonally to the first and second axes (x, y) are filtered using the filter specification (108) to obtain a further filtered acceleration value (ayf) and a further filtered rotational speed value (ωzf), wherein, in step (202) of the normalization, the further filtered acceleration value (ayf) and the further filtered rotational speed value (ωzf) are normalized using the normalization specification (112) to obtain a further normalized acceleration value (ayn) and a further normalized rotational speed value (ωzn), wherein, in step (206) of the observation, the further normalized acceleration value (ayn) and the further normalized rotational speed value (ωzn) are observed using the observation specification (116) to detect the standstill.

6. Method according to any one of the preceding claims, wherein, in step (206) of the observation, the standstill is detected additionally if a wheel rotational speed value (120) representing at least one of the wheel rotational speeds of the vehicle is less than a wheel standstill value.

7. Method according to any one of the preceding claims, wherein, in step (206) of the observation, the standstill is detected additionally if no controller of the vehicle (100) is active.

8. Device (102) that is arranged to carry out steps of the method according to any one of the preceding claims in corresponding units.

9. Computer program that is arranged to carry out the method according to any one of Claims 1 to 7.

10. Machine-readable storage medium on which the computer program according to Claim 9 is stored.

**Revendications**

1. Procédé de détection d'un état d'arrêt d'un véhicule (100), dans lequel le procédé comprend les étapes suivantes :

   le filtrage (200) d'une valeur d'accélération (ax) sur un premier axe (x) du véhicule (100) et le filtrage d'une valeur de vitesse de rotation (ωy) autour d'un deuxième axe (y) du véhicule (100), orienté orthogonalement à l'axe (x) à l'aide d'une règle de filtrage (108), pour obtenir une valeur d'accélération filtrée (axf) et une valeur de vitesse de rotation filtrée (ωyf) ;
   la normalisation (202) de la valeur d'accélération filtrée (axf) et de la valeur de vitesse de rotation filtrée (ωyf) à l'aide d'une règle de normalisation (112), pour obtenir une valeur d'accélération normalisée (axn) et une valeur de vitesse

de rotation normalisée ($\omega$yn) ; et
la surveillance (204) de la valeur d'accélération normalisée (axn) et de la valeur de vitesse de rotation normalisée ($\omega$yn) à l'aide d'une règle de surveillance (116), pour détecter l'arrêt, **caractérisé en ce que** l'arrêt est détecté lorsqu'une somme de la valeur d'accélération normalisée (axn) et de la valeur de vitesse de rotation normalisée ($\omega$yn) est inférieure à une valeur d'arrêt.

2. Procédé selon la revendication 1, dans lequel, lors de l'étape (200) de filtrage, la valeur d'accélération (ax) et/ou la valeur de vitesse de rotation ($\omega$y) est moyennée sur une période de temps de dérive lorsque l'arrêt est détecté, pour obtenir un intervalle d'accélération et/ou un intervalle de vitesse de rotation, dans lequel, lors de l'étape (206) de surveillance, un déplacement du véhicule (100) est détecté lorsque l'intervalle d'accélération et/ou l'intervalle de vitesse de rotation dépasse une valeur limite.

3. Procédé selon l'une quelconque des revendications précédentes, dans lequel, lors de l'étape de filtrage (200), la valeur d'accélération (ax) et/ou la valeur de vitesse de rotation ($\omega$y) est moyennée sur une période de temps dynamique, pour obtenir la valeur d'accélération filtrée (axf) et/ou la valeur de vitesse de rotation filtrée ($\omega$yf) lorsqu'un déplacement est détecté lors de l'étape (206) de surveillance.

4. Procédé selon l'une quelconque des revendications précédentes, dans lequel, lors de l'étape (206) de surveillance, aucun arrêt n'est détecté pendant une période de temps minimale lorsqu'un déplacement est détecté.

5. Procédé selon l'une quelconque des revendications précédentes, dans lequel lors de l'étape (200) de filtrage, une autre valeur d'accélération (ay) sur le deuxième axe (y) et une autre valeur de vitesse de rotation ($\omega$z) autour d'un troisième axe (z) du véhicule (100), orienté orthogonalement aux premier et deuxième axes (x, y), sont filtrées à l'aide de la règle de filtrage (108), pour obtenir une autre valeur d'accélération filtrée (ayf) et une autre valeur de vitesse de rotation filtrée ($\omega$zf), dans lequel, lors de l'étape (202) de normalisation, l'autre valeur d'accélération filtrée (ayf) et l'autre valeur de vitesse de rotation filtrée ($\omega$zf) sont normalisées à l'aide de la règle de normalisation (112), pour obtenir une autre valeur d'accélération normalisée (ayn) et une autre valeur de vitesse de rotation normalisée ($\omega$zn), dans lequel, lors de l'étape (206) de surveillance, l'autre valeur d'accélération normalisée (ayn) et l'autre valeur de vitesse de rotation normalisée ($\omega$zn) sont surveillées à l'aide de la règle de surveillance (116), pour détecter l'arrêt.

6. Procédé selon l'une quelconque des revendications précédentes, dans lequel, lors de l'étape (206) de surveillance, l'arrêt est en outre détectée lorsqu'une valeur de vitesse de roue (120), représentant au moins une vitesse de roue du véhicule, est inférieure à une valeur d'arrêt de roue.

7. Procédé selon l'une quelconque des revendications précédentes, dans lequel, lors de l'étape (206) de surveillance, l'arrêt est en outre détecté lorsqu'aucun régulateur du véhicule (100) n'est actif.

8. Dispositif (102) conçu pour mettre en œuvre des étapes du procédé selon l'une quelconque des revendications précédentes dans des unités correspondantes.

9. Programme d'ordinateur conçu pour mettre en œuvre le procédé selon l'une quelconque des revendications 1 à 7.

10. Support de stockage lisible par machine sur lequel est stocké le programme d'ordinateur selon la revendication 9.

# Fig. 1

100      108      102      112         116

| ax | axf | axn |
|----|-----|-----|
| ay | ayf | ayn |
| az | azf | azn |
| ωx | ωxf | ωxn |
| ωy | ωyf | ωyn |
| ωz | ωzf | ωzn |

118

114

104          106     120     110

# Fig. 2

200

202

204

**Fig. 3**

## Fig. 4

## Fig. 5

**Fig. 6**

|ω z range|

# Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- KR 20040040155 A
- US 2008234933 A1
- EP 0488594 A1